# EUROPEAN PATENT SPECIFICATION

(11) **EP 3 484 307 B1**
(45) Date of publication and mention of the grant of the patent: **17.04.2024**
(21) Application number: 16754559.9
(22) Date of filing: 01.08.2016
(51) Int. Cl.: A23L 7/10, A23L 7/152, A23L 7/196, A23L 11/10, A23L 11/30, A23B 9/04

(54) **METHOD TO PRE-COOK GERMINATED WHOLE GRAINS BROWN RICE, COARSE CEREALS AND LEGUMES FIT FOR DOMESTIC AND INDUSTRIAL USE, SHORT COOKING OR INSTANT COOKING PRODUCT**
VERFAHREN ZUM VORKOCHEN VON GEKEIMTEM BRAUNEM VOLLKORNREIS, HIRSEZEREALIEN UND HÜLSENFRÜCHTEN ZUR HÄUSLICHEN UND INDUSTRIELLEN VERWENDUNG, KURZKOCH- UND INSTANTKOCHPRODUKT
PROCÉDÉ DE PRÉ-CUISSON DE RIZ COMPLET À GRAINS ENTIERS GERMÉS, DE CÉRÉALES BRUTES ET DE LÉGUMES CONVENANT À L'UTILISATION DOMESTIQUE ET INDUSTRIELLE, PRODUIT À CUISSON COURTE OU À CUISSON INSTANTANÉE

(43) Date of publication of application: 22.05.2019
(73) Proprietor: Pedon S.p.A., 36064 Colceresa (VI) (IT)
(72) Inventor: VIGNOLA, Marcello, 13100 Vercelli (IT); VIGNOLA, Francesco, 13100 Vercelli (IT)
(74) Representative: Lissandrini, Marco
(86) International application number: PCT/IB2016/054613
(87) International publication number: WO 2018/025061

(56) References cited:
- FR-A- 1 489 811
- US-A- 4 829 891
- US-A1- 2007 196 559
- US-A1- 2008 286 435
- KE MIN WANG ET AL: "Distribution of phytic acid and mineral elements in threerice (L.) cultivars", JOURNAL OF CEREAL SCIENCE, ACADEMIC PRESS LTD, GB, vol. 54, no. 1, 4 March 2011 (2011-03-04), pages 116-121, XP028248391, ISSN: 0733-5210, DOI: 10.1016/J.JCS.2011.03.002 [retrieved on 2011-06-15]

## Description

The present invention relates to a method to pre-cook germinated whole grains of brown rice, coarse cereals and legumes according to appended claim 1, in particular to obtain a short-cooking (10 min) or instant cooking product with substantially enhanced nutritional values.

"Germinated grains" mean the kernels in which the germination starts. The three parts which form the whole grain, that are germ, endosperm and bran, are crucial to creating the new plant. The germ is the plant embryo, which feeds, during its growth, on the starchy endosperm. The bran layers provide additional nutrients and help to protect the grain seed until it is ready to start the growth cycle.

Once germination process starts, enzyme activity wipes out the growth inhibitors and transform the long-term-storage starch of the endosperm to simpler molecules that are easily digested by the growing plant embryo.

When the grains begin germination, they offer the goodness of whole grains while becoming easily digestible. The germination process apparently increases the amount of bio-availability of some vitamins (notably vitamin C), minerals and GABA (gamma amino-butyrric acid), making sprouted grains a potential nutritious powerhouse.

Brown rice contains more nutritional components than ordinary white rice. Despite its elevated content of bioactive components, consumption of brown rice is limited owing to its dark appearance and hard texture. Some people find difficult to digest because of the content of phytic acid, naturally converted by the body into phytates, which are un-absorbable.

Today's consumers demand however is directed to cereals and rice that besides being tasty and nutritious, may help body to fight modern life-style stress and related diseases. Anti-nutrients substances are present in the whole-grain cereals that prevent a large part of the nutrients contained in whole-grain to be correctly absorbed. Sprouting plays an important role in eliminating a substantial part of these anti-nutrients; once sprouting starts enzyme activity wipe out these growth inhibitors and transforms the starch of the endosperm to simpler molecules. This enzymatic action turns the complex carbohydrates of the grain into a more digestible simple sugar; now that the grain is a simple sugar it is considered a vegetable, as simple sugars are vegetables. The body metabolizes easily those simple sugars and doesn't need pancreatic enzymes to digest them. Most bodies do not have abundance of these pancreatic enzymes (amylase to digest carbohydrates, lipase to digest fats, protease to digest proteins); if not properly metabolized, carbohydrates, fats and proteins can cause many digestive disorders and related diseases. The sprouted cereals does not require heavy pancreatic action, which is quite limited in most patients with diabetes ; like most vegetables they have a Low Glycemix Index (G.I.) so it can be considered as "diabetic-friendly".

The sprouting process activates an enzymatic process , just like the human body does, making the sprouted whole grains more easy to digest than unsprouted whole grains.

Germination is a natural process which occurs during growth period of seeds whenever they meet minimum conditions for growth and development. During this process, reserve materials, commonly used for respiration and synthesis of new cells prior to developing embryo, are degraded.

The process of germination starts with the uptake of water by the quiescent dry seed and terminates with the emergence of the embryonic axis.

The metabolic changes are complex and include phytase activity related to globoids of the protein bodies, which can hydrolyse amylose. Starch is a nutritional polysaccharides composed by Amylose and Amylopectin; the polymer chain has bonds with alfa-1,4- glycosilidic linkage. Breakdown shows that the combined action of alfa and beta amylase, the R-enzyme produce glucose , then converted to sucrose.

The sprouting of kernels attracts the water molecules around them, reduces the intermolecular interaction between the starch molecules and then increases the flexibility of the starch. The hormones arising from the embryonic axis result in synthesis and secretion of hydritic acid and other enzymes. These enzymes depolymerize cell polysaccharides, the proteins and starch reserves of the endosperm. This process of overcoming the brittleness in starch softens the structure of the kernel and increase the mobility of the macromolecular chains; the starch is transformed into an amorphous paste.

" Plasticization" is the phase when the starch structure is transformed in gel ..

Several studies of the effects of the germination in cereal and legumes found that germination causes an increase of protein contents and dietary fibers, an increase of minerals bioavailability and reduction of tannin and phytic acid contents (Sourse: Rao and Prabhavati, 1982; Hussein and Ghanem, 1999; Ghavidel and Prakash, 2007).

Decomposition of high molecular weight polymers causes generation of bio-functional substances and improvement of organoleptic qualities due to the softening of texture and increase of flavor in grains ( Beal and Mottram, 1993). In Japan, germination was used to enhance flavor and nutrients in brown rice besides obtaining a softened texture (Ohtsubo et alia, 2005).

Germination Process of brown rice, barley, as well as of all other cereals and legumes can be used both to improve their taste as well as further enhance their nutritional value and health functions.

It has been found that germinated grains maintain their basic nutritional components such as vitamins, minerals, dietary fibres and essential amino-acids, and develop additional bioactive components, such as ferulic acid, gamma-oryzanol and gamma aminobutyric acid. Germinated brown rice has been reported to have a beneficial effects on hypertension, hyperlipidemy besides reducing risk of some chronic diseases, such as cancer, diabetes, cardiovascular disease, and Alzheimer's disease. During Barley germination the beta glucanase is synthesized, which results in the depolymerisation of beta-glucans, enhancing the nutritive value. In germinating wheat grains extensive degradation of cell arabinoxylans occurs ,leading to the sysnthesis of new compounds, some of which have high bioactivity and can increase the nutritional value of the grains. The germination of rye increase the content of folate and methanol soluble phenolic compounds by 2-3.5 fold (Liukonen et al.,2003.)

Beans and Lentils after the treatment show an important increase of RS 3, owing to the starch retrogradation due to rapid cooling after gelatinization; the resistant starch has a potential to manage obesity because has the ability to influence satiety. Peas, as all the other legumes, are rich source of food proteins; sprouting fights the anti-nutritional factors which lower the nutritional values of cereals and legumes by reducing the digestibility or bioavailability of nutrients.

The germinated brown rice (GBR), compared to milled rice contains more nutrients: 10 times GABA, 4 times dietary fiber, vitamin E, nyacine and lysine and about 3 times more vitamin B1,B2 and Magnesium (Sakusa et alia, Okada et alia).

Object of the present invention is to provide a method to pre-cook germinated whole grains brown rice, coarse cereals and legumes to obtain a short-cooking (10 min) or instant cooking product and obtain pre-germinated natural cereals and legumes dry in whole-grain form. Grain is preserved not milled or altered with a pleasant taste and appearance.

US 2008260873 discloses a process aimed to obtain an agent for prevention or improvement of a neuropathy, comprising a pre-germinated brown rice lipid fraction as an effective ingredient. This fraction comprises a chloroform-methanol soluble component of pre-germinated brown rice.

This process is focused to extract the lipid fraction rather processing rice or cereals for human consumption.

US 7008662 B2 discloses a process in which rice is milled and then partially reconstituted by coating components extracted by enzyme treatment or by extraction of fat originated from bran, which is normally obtained with solvents. FR1489811 discloses a process for the treatment of cereals, in particular for bleaching and polishing rice, and apparatus for carrying out such a process. US2008/286435 and US2007/196559 disclose a method for manufacturing brown rice.US4829891 discloses an apparatus for humidifying rice grains.

Object of the present invention is to provide a method to pre-cook germinated whole grains of brown rice, coarse cereals and legumes according to claim 1.

The obtained product can be used for domestic consumption as cereal or legume in grain form or crisped /puffed/flaked or as row basic component for preparation of special drink or other cereal drink.

Grains may be also used to obtain pre-cooked stabilized flours with enhanced nutritional values for different industrial use such as pasta, noodles, breads products, bakery products such as crackers, biscuits etc.

The process according to the invention controls/eliminates strong flavors and intense coloring often found in natural coarse cereals; the high level of phenolic compounds, although desirable for the significant antioxidant and antimicrobial properties of bran and germ, often release strong off-flavors and intense colors. It is known that consumers refuse strong cereal off-flavors and this causes reduction in the consumption of natural whole grains in favor of starch-based products which have more appealing profiles.

The method according to the invention, due to the sprouting of the grains, eliminates a substantial part of the anti-nutrients substances allowing the body to absorb correctly the nutritional components and bio-functional substances. At the same time intervening mechanically on the grains takes out the largest part of phytic acid situated in the aleurone layer close to the embryo.

Most of processed grains are gluten free and with low G.I. (glycemic index), so are excellent for celiac sufferers and diabetics.

Further features and advantages of the method according to the invention shall be made clearer by the description, given herein below.

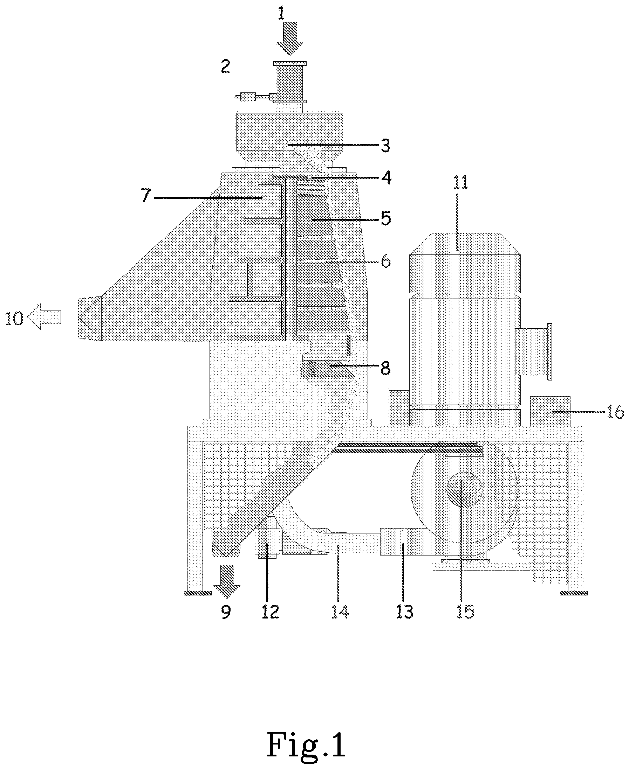

The present invention is further illustrated by way of the attached figure 1 showing a schematic view of a turbo cleaner that can be used in the method according to the present invention. The turbo cleaner per se is outside the claimed subject-matter. In a preferred embodiment, the method according to the invention comprises the step of sprouting analysis of each lot before acceptance. This step comprises cleaning, dehulling the cereals covered by hulls, selecting the husked grains to remove the immature and brokens kernels. After the dry selection, cereals not protected by hulls and legumes are accurately washed with hot drinkable water before soaking.

Then the method comprises sprouting by soaking preferably in tanks, for example for a holding period of 6-8 hours, followed by setting phase, during which water is drained and compressed air is injected to remove carbon dioxide; depending on the cereal or legume employed and its grain size and texture the steeping time will be longer. The drinkable water is preferably heated at a temperature of 14°-16° C till to 26°-34°C, replaced for example every 6 hours and then sanitized and distilled. The sanitized water is re-usable so minimizing the quantities employed. After steeping the grains are moved to germination units, circular compartment where the turner moves on a central pivot, with intervals of 6-8 hours till when the sprouts begin to form. Heat exchangers provide constant temperature and humidified air to avoid moisture loss.

The temperature and length of germination reproduces the normal sprouting conditions however according to the invention sprouting is stopped when the sprouts begin to form in order to avoid malting process, which may give a dark color to the kernels and an excessive sweet taste.

The grains are dripped and transported to two or more insulated tanks in which a solution containing 0.1-0.8%, preferably 0.2% salt (NaCl) is added to the grains through an Archimede screw conveyor to assure a uniform distribution.

Then the method comprises tempering for about 30-45 minutes without moisture or temperature loss. The product is fed from the tanks to a Microwawe device which operates in continuous.

In the Microwave (MW) device, the core of the kernel is heated at a temperature about 70-75°C, depending on the gelatinization temperature of each cereal or legume which is related to the dimensions of the starch granules, the amylase and amilopectine content and the swelling of the granules. The holding time is preferably comprised from 1 minute to 5 minutes. MW radiations limit the interaction between amylose and amylopectin, accelerate separation and dispersion continuing the process started by germinating the grain. Germinating the kernels in fact provides similar results of the MW treatment: it attracts water molecules, reduces interaction between the starch molecules finally increasing starch flexibility level. Softening the starch structure and increasing the mobility of the macro-nuclear chains allows to reduce processing temperature. Surprisingly gelatinization will result from combination of germination in which the cereal is already plasticized, coupled with Microwawe treating. The salts added before MW heating contains lyotropic ions which are a series of ions capable of enhancing the water structure; the added salt improves microwawe efficiency, causing the grains to be heated at a faster rate, avoiding to increase the temperature.

The method further comprises a first drying in a fluid bed dryer to reduce the MC from about 30-35% to 16% MC.

Then the grains are turbo cleaned at 16% MC. The phytic acid is situated in the aleurone layer which is bound tightly to the starchy endosperm, with the exception of an area close to the embryo where a nugget containing phytates is to be found. The turbo cleaning is preferably configured to eliminate the "nugget", thick layer of modified aleurone cells (these cells are rectangular in shape, have fewer and smaller lipid bodies) containing phytates attached at the top and the bottom of the embryo; the walls of these cells are weakened during sprouting or broken when the sprouts come out and therefore can be easily eliminate without intervening on the whole kernel.

Figure 1 shows a vertical conical turbo machine configured to create high turbulence created in the milling chamber by modified and amplified aeriation rings.

In particular the machine comprises an inlet 1 and an inlet slide 2 disposed on a distributor 3. A feeding worm 4 feeds the grains to a sequence of whitening discs 5 divided by aeration rings 6. Sieves 7 are provided on the inner wall of the machine. At the end of the sequence of discs 5, the machine comprises a counter balance disc 8. Grains exit the machine from an outlet 9. A bran aspiration 10 working at 0.24-0-27 bar (180-200 mm Hg) sucks the bran.

The machine comprises a main drive motor 11 and an elevating device motor 12. A ventilator 13 with motor is connected to an air pipe 14 and an air inlet 15. The ventilator 13, the air pipe 14 and the air inlet 15 are configured to supply high pressure and volume. The main drive motor 11 is connected to an inverter 16 in order to regulate rotational speed of the whitening discs 5.

The grains rub between themselves and the sieves, assuring a gentle and uniform degree of shifting. Air speed and volume are adjustable as distance of brakes, the peripheral speed of the cone regulated through the inverter; according to the invention, the emery disks are substituted with smooth disks in plastic material. The cells close to the embryo which contain the phytates already weakened by the sprouting are so eliminated.

After the turbo cleaning the product passes through an horizontal water milling machine totally unrestrained to take out the small particles of bran attached to the kernels. At the end of this process the grain does not change its brown colour and it is smooth and brilliant; less than 2% of the grain is removed and a substantial quantity of phytates is eliminated.

Then the method according to the invention comprises a pressing step whereby after processing the product is heated at 65° C in an Archimede type screw conveyor adding steam and sent to a compression or pressing unit.

When pressed the gelatinized starch deforms; when the temperature is just a few degrees above TG (Glass transition temperature), the polymer is still very viscous. Therefore, the polymer will fail when subjected to rapid compression and the grain will be suitable to an even expansion. In a preferred embodiment, the gap between the rolls is adjustable to compress the kernels leaving unchanged its shape; the pressing phase is not intended to flatten the grains.

After pressing it is possible to obtain two types of products: the 10 minutes cook product and the instant product. The grains for the 10min cook product are dried to 12 % MC, tempered in the last three belts without air circulation and rapidly cooled at the exit; the product dried at 16% MC is conveyed directly to the air treatment. The range of temperature of the hot air varies from 160 to 240° C; the residence time in the expander is about 30 seconds to 240 seconds.

During the expansion phase the temperature of the product increases and the moisture inside the grain diffuses to the surface and evaporate. The moisture retained inside the grain will remain in a liquid state even after the grain has been heated above 100°C; the structure of the grain prohibits water from boiling, therefore the temperature of the retained water can exceed 100°C. The structure of the grain weakens with the increase of the temperature and at a high enough temperature the superheated water vaporizes, the kernel expands and the structure results in a honey-comb like structure.

The cracks and porous structure will allow the grain to be rehydrated in few minutes or just adding hot or cold water, depending on the treatment. The method according to the invention is fully natural, respects the ambient with a small water consumption through distilling the water used for sprouting and re-utilizing it. The treatments are soft, with reduced processing times and low temperatures; the negative effects of conventional parboiling, that are dark color, chewy consistency and not typical taste are avoided. Aroma, taste and flavor of natural rice are enhanced; the skin of the cereals and legumes is softened so the cooking time is reduced from 25-30 min to 10 min. The instant products are obtained only by creating fissures in the structure of the kernel with hot air, avoiding enzyme or acid treatments commonly used.

## Claims

1. Method to pre-cook germinated whole grains of brown rice, coarse cereals and legumes comprising:
- sprouting by soaking for example in tanks, and in circular compartments with turner equipment.
- stopping the sprouting when the sprouts begin to form in order to avoid malting process,
- dripping and adding to the grain a solution containing 0.1-0-8% preferably 0.2%, NaCl,
- tempering the grains without moisture or temperature loss;
- heating the core of the grains in a microwave device at a temperature about 70-75°C for 1-5 minutes,
- first drying in a fluid bed dryer to reduce the moist content (MC) from about 30-35% to 16% MC,
- turbo cleaning at 16% MC, wherein the grains are turbo cleaned passing through a turbo device configured to eliminate only the cells close to the embryo which contain the phytates already weakened by the sprouting, the turbo device being a vertical conical turbo cleaning machine comprising:
- a sequence of whitening discs (5) divided by aeration rings (6), sieves (7) provided on the inner wall of the machine, wherein the whitening discs (5) are smooth disks in plastic material,
- a bran aspiration 10 preferably working at 0.24-0.27 bar (180-200 mm Hg) in order to suck the bran,
- a main drive motor (11) connected to an inverter (16) in order to regulate rotational speed of the whitening discs (5),
- a ventilator (13) connected to an air pipe (14) and an air inlet (15), the ventilator (13), the air pipe (14) and the air inlet (15) being configured to supply high pressure and volume whereby creating high turbulence in the processing chamber,
- heating the grains at 65° C preferably in an Archimede type screw conveyor adding steam,
- pressing the grains in a compression or pressing unit.

2. Method to pre-cook germinated whole grains of brown rice, coarse cereals and legumes according to claim 1, comprising after pressing the grains:
- drying the grains to 12 % MC by tempering through belts and rapidly cooling at the exit wherein preferably the grains temper through the last three belts without air circulation.

3. Method to pre-cook germinated whole grains of brown rice, coarse cereals and legumes according to claim 1, wherein sprouting occurs for a period of 6-8 hours till to 48 hours, depending on the cereal or legume employed and its characteristics.

4. Method to pre-cook germinated whole grains of brown rice, coarse cereals and legumes according to claim 1, wherein water used in sprouting is heated at a temperature of 14-16°C to 26-34°C and replaced preferably every 6 hours and then sanitized.

5. Method to pre-cook germinated whole grains of brown rice, coarse cereals and legumes according to claim 4, comprising re-using the sanitized water so minimizing the quantities employed.

6. Method to pre-cook germinated whole grains of brown rice, coarse cereals and legumes according to one or more of the preceding claims, comprising dripping and adding to the grain a solution containing NaCl through an Archimede screw conveyor to assure a uniform distribution.

7. Method to pre-cook germinated whole grains of brown rice, coarse cereals and legumes according to one or more of the preceding claims, comprising tempering the grains for about 30 minutes to 45 minutes without moisture or temperature loss.

8. Method to pre-cook germinated whole grains of brown rice, coarse cereals and legumes according to one or more of the preceding claims, wherein from the tanks the product is fed continuously to the Microwawe device whereby the process pass from batch to continuous.

9. Method to pre-cook germinated whole grains of brown rice, coarse cereals and legumes according to claim 1, wherein after being turbo cleaned the grains are passed through an horizontal water milling machine.

## Patentansprüche

1. Verfahren zum Vorgaren von gekeimten ganzen Körnern aus braunem Reis, grobem Getreide und Hülsenfrüchten, umfassend:
- Keimen durch Einweichen zum Beispiel in Tanks und in kreisförmigen Unterteilungen mit Wenderausrüstung,
- Stoppen des Keimens, wenn sich die Keime zu bilden beginnen, um einen Malzprozess zu vermeiden,
- Abtropfen und Zugeben einer Lösung zum Korn, die 0,1-0-8%, vorzugsweise 0,2%, NaCl enthält,
- Temperieren der Körner ohne Feuchtigkeits- oder Temperaturverlust,
- Erhitzen des Kerns der Körner in einer Mikrowellenvorrichtung bei einer Temperatur von etwa 70-75 °C für 1-5 Minuten,
- erstes Trocknen in einem Wirbelschichttrockner, um den Feuchtigkeitsgehalt (MC) von etwa 30-35% auf 16% MC zu reduzieren,
- Turboreinigen bei 16 % MC, wobei die Körner turbogereinigt werden, indem sie durch eine Turbovorrichtung passieren, die dazu konfiguriert ist, nur die Zellen in der Nähe des Embryos zu eliminieren, die die Phytate enthalten, die bereits durch das Keimen geschwächt sind, wobei die Turbovorrichtung eine vertikale konische Turboreinigungsmaschine ist, die Folgendes umfasst:
- eine Abfolge von Aufhellscheiben (5), getrennt durch Belüftungsringe (6), Siebe (7), die an der Innenwand der Maschine vorgesehen sind, wobei die Aufhellscheiben (5) glatte Scheiben aus Kunststoffmaterial sind,
- eine Kleieabsaugung (10), die vorzugsweise bei 0,24-0,27 bar (180-200 mm Hg) arbeitet, um die Kleie zu saugen,
- einen Hauptantriebsmotor (11), der mit einem Wechselrichter (16) verbunden ist, um die Drehzahl der Aufhellscheiben (5) zu regeln,
- einen Ventilator (13), der mit einer Luftleitung (14) und einem Lufteinlass (15) verbunden ist, wobei der Ventilator (13), die Luftleitung (14) und der Lufteinlass (15) konfiguriert sind, um hohen Druck und Volumen zu liefern, wodurch hohe Turbulenzen in der Prozesskammer erzeugt werden,
- Erhitzen der Körner bei 65 °C vorzugsweise in einem Schneckenförderer vom Archimede-Typ unter Zugabe von Dampf,
- Pressen der Körner in einer Verdichtungs- oder Presseinheit.

2. Verfahren zum Vorgaren von gekeimten ganzen Körnern aus braunem Reis, grobem Getreide und Hülsenfrüchten nach Anspruch 1, umfassend nach dem Pressen der Körner:
- Trocknen der Körner auf 12 % MC durch Temperieren durch Bänder und schnelles Abkühlen am Ausgang, wobei die Körner vorzugsweise durch die letzten drei Bänder ohne Luftzirkulation temperieren.

3. Verfahren zum Vorgaren von gekeimten ganzen Körnern aus braunem Reis, grobem Getreide und Hülsenfrüchten nach Anspruch 1, wobei das Keimen je nach verwendetem/r Getreide oder Hülsenfrucht und dessen/deren Eigenschaften für einen Zeitraum von 6-8 Stunden bis zu 48 Stunden erfolgt.

4. Verfahren zum Vorgaren von gekeimten ganzen Körnern aus braunem Reis, grobem Getreide und Hülsenfrüchten nach Anspruch 1, wobei das beim Keimen verwendete Wasser bei einer Temperatur von 14-16 °C auf 26-34 °C erhitzt und vorzugsweise alle 6 Stunden ausgewechselt und dann desinfiziert wird.

5. Verfahren zum Vorgaren von gekeimten ganzen Körnern aus braunem Reis, grobem Getreide und Hülsenfrüchten nach Anspruch 4, umfassend die Wiederverwendung des desinfizierten Wassers, um die eingesetzten Mengen zu minimieren.

6. Verfahren zum Vorgaren von gekeimten ganzen Körnern aus braunem Reis, grobem Getreide und Hülsenfrüchten nach einem oder mehreren der vorhergehenden Ansprüche, umfassend das Abtropfen und Zugeben einer NaCl-haltigen Lösung zu dem Korn durch einen Archimede-Schneckenförderer, um eine gleichmäßige Verteilung zu gewährleisten.

7. Verfahren zum Vorgaren von gekeimten ganzen Körnern aus braunem Reis, grobem Getreide und Hülsenfrüchten nach einem oder mehreren der vorhergehenden Ansprüche, umfassend das Temperieren der Körner für etwa 30 Minuten bis 45 Minuten ohne Feuchtigkeits- oder Temperaturverlust.

8. Verfahren zum Vorgaren von gekeimten ganzen Körnern aus braunem Reis, grobem Getreide und Hülsenfrüchten nach einem oder mehreren der vorhergehenden Ansprüche, wobei das Produkt aus den Tanks kontinuierlich der Mikrowellen-Vorrichtung zugeführt wird, wodurch der Prozess von chargenweise zu kontinuierlich übergeht.

9. Verfahren zum Vorgaren von gekeimten ganzen Körnern aus braunem Reis, grobem Getreide und Hülsenfrüchten nach Anspruch 1, wobei die Körner nach der Turboreinigung durch eine horizontale Wassermahlmaschine geführt werden.

## Revendications

1. Procédé de pré-cuisson de grains entiers germés de riz complet, de céréales brutes et de légumes, comprenant :
- germer par trempage par exemple dans des cuves, et dans des compartiments circulaires avec un équipement de retournement,
- arrêter la germination lorsque les germes commencent à se former afin d'éviter le processus de maltage,
- égoutter et ajouter au grain une solution contenant 0,1-0-8%, de préférence 0,2%, NaCl,
- mouiller les grains sans perte d'humidité ou de température,
- chauffer le cœur des grains dans un appareil à micro-ondes à une température d'environ 70-75 °C pendant 1-5 minutes,
- effectuer un premier séchage dans un séchoir à lit fluidisé pour réduire la teneur en humidité (MC) d'environ 30-35% à 16% MC,
- turbo nettoyer à 16% MC, dans lequel les grains sont turbo nettoyés en passant par un dispositif turbo configuré pour éliminer uniquement les cellules proches de l'embryon qui contiennent les phytates déjà affaiblis par la germination, le dispositif turbo étant une machine de turbo nettoyage conique verticale comprenant :
- une séquence de disques de blanchiment (5) divisés par des anneaux d'aération (6), des tamis (7) prévus sur la paroi interne de la machine, dans laquelle les disques de blanchiment (5) sont des disques lisses en matière plastique,
- une aspiration de son (10) travaillant de préférence à 0,24-0,27 bar (180-200 mm Hg) afin d'aspirer le son,
- un moteur d'entraînement principal (11) relié à un onduleur (16) afin de réguler la vitesse de rotation des disques de blanchiment (5),
- un ventilateur (13) connecté à un tuyau d'air (14) et à une entrée d'air (15), le ventilateur (13), le tuyau d'air (14) et l'entrée d'air (15) étant configurés pour fournir une pression et un volume élevés, créant ainsi une turbulence élevée dans la chambre de traitement,
- chauffer les grains à 65 °C de préférence dans un convoyeur à vis de type Archimède en ajoutant de la vapeur,
- presser les grains dans une unité de compression ou de pressage.

2. Procédé de pré-cuisson de grains entiers germés de riz complet, de céréales brutes et de légumes selon la revendication 1, comprenant après presser les grains :
- sécher les grains à 12 % MC en les mouillant à travers des courroies et en les refroidissant rapidement à la sortie, les grains étant de préférence mouillés à travers les trois dernières courroies sans circulation d'air.

3. Procédé de pré-cuisson de grains entiers germés de riz complet, de céréales brutes et de légumes selon la revendication 1, dans lequel la germination se produit pendant une période de 6 à 8 heures jusqu'à 48 heures, en fonction de la céréale ou du légume utilisé et de ses caractéristiques.

4. Procédé de pré-cuisson de grains entiers germés de riz complet, de céréales brutes et de légumes selon la revendication 1, dans lequel l'eau utilisée pour la germination est chauffée à une température de 14-16 °C à 26-34 °C et remplacée de préférence toutes les 6 heures, puis désinfectée.

5. Procédé de pré-cuisson de grains entiers germés de riz complet, de céréales brutes et de légumes selon la revendication 4, comprenant réutiliser l'eau désinfectée afin de minimiser les quantités employées.

6. Procédé de pré-cuisson de grains entiers germés de riz complet, de céréales brutes et de légumes selon une ou plusieurs des revendications précédentes, comprenant l'égouttage et l'ajout au grain d'une solution contenant du NaCl à travers un convoyeur à vis Archimède pour assurer une distribution uniforme.

7. Procédé de pré-cuisson de grains entiers germés de riz complet, de céréales brutes et de légumes selon une ou plusieurs des revendications précédentes, comprenant mouiller les grains pendant environ 30 minutes à 45 minutes sans perte d'humidité ou de température.

8. Procédé de pré-cuisson de grains entiers germés de riz complet, céréales brutes et de légumes selon une ou plusieurs des revendications précédentes, dans lequel, à partir des réservoirs, le produit est alimenté en continu vers le dispositif Micro-ondes, le processus passant ainsi de discontinu à continu.

9. Procédé de pré-cuisson de grains entiers germés de riz complet, de céréales brutes et de légumes selon la revendication 1, dans lequel après avoir été turbo nettoyés, les grains sont passés à travers une fraiseuse à eau horizontale.
